# EUROPEAN PATENT SPECIFICATION

(11) **EP 4 132 069 B1**
(45) Date of publication and mention of the grant of the patent: **26.11.2025**
(21) Application number: 20933754.2
(22) Date of filing: 31.12.2020
(51) Int. Cl.: H04W 8/18

(54) **DETERMINING A TERMINAL PROFILE**
BESTIMMUNG EINES ENDGERÄTEPROFILS
DÉTERMINATION D'UN PROFIL DE TERMINAL

(30) Priority: 30.04.2020 CN 202010368072
(43) Date of publication of application: 08.02.2023
(60) Divisional application: 25203132.3
(73) Proprietor: Huawei Technologies Co., Ltd., Shenzhen, Guangdong 518129 (CN)
(72) Inventor: CAO, Yalin, Shenzhen, Guangdong 518129 (CN); TAO, Liang, Shenzhen, Guangdong 518129 (CN); BAO, Dewei, Shenzhen, Guangdong 518129 (CN); SUN, Zhenhang, Shenzhen, Guangdong 518129 (CN); BAI, Xiaofei, Shenzhen, Guangdong 518129 (CN)
(74) Representative: Pfenning, Meinig & Partner mbB
(86) International application number: PCT/CN2020/142310
(87) International publication number: WO 2021/218228

(56) References cited:
- WO-A2-2009/076943
- CN-A- 106 488 528
- CN-A- 108 171 551
- CN-A- 109 121 093
- CN-A- 109 121 093
- CN-A- 109 428 857
- CN-A- 110 225 009
- KR-A- 20190 106 950
- US-A1- 2014 040 445
- US-A1- 2016 073 252
- US-A1- 2018 191 729
- US-A1- 2020 151 798

## Description

### TECHNICAL FIELD

This application relates to the field of communications technologies, and in particular, to a method and an apparatus for determining a terminal profile, and a system.

### BACKGROUND

Currently, a terminal profile is increasingly widely demanded in a wireless local area network (wireless local area network, WLAN), for example, roaming optimization, load balance, access control, and radio calibration. The terminal profile refers to a related network capability of a terminal on software or hardware. For example, in terms of roaming optimization, to improve roaming experience, a terminal profile related to the roaming optimization usually needs to be determined, and then, a corresponding roaming steering condition is determined based on the terminal profile related to the roaming optimization, to perform roaming steering on the terminal. Therefore, how to determine the terminal profile becomes an urgent problem to be resolved currently.

US 2014/040445 A1 describes a method that includes determining if one or more electronic device capabilities represented in one of a group of device profiles is associated with one or more content characteristics represented in one of a group of resource profiles. The method also includes assigning the device profile to the resource profile if the electronic device capabilities are associated with the content characteristics. Furthermore, the method includes, upon receipt of content defined by the resource profile, initiating delivery of the content to at least one electronic device associated with the one device profile based upon the assignment. KR 10 - 2019 - 0106950 A concerns a data generating method for a terminal that includes: a step of obtaining source data for generating a user s profile; a step of generating a cluster related to service recommendations using the source data; a step of generating the profile of the user using the cluster; and a step of transmitting the profile of the user to a server. US 2016/073252 A1 describes device-identifying data that can be used to uniquely recognize and optionally track and report on device activity at one or more hotspot locations by way of the creation and management of a device profile uniquely associated with such devices and stored in a network accessible knowledge base.

### SUMMARY

The present invention is defined by the independent claims. Particular embodiments are specified in the dependent claims.

The technical solutions provided in this application can bring at least the following beneficial effects.

In this application, the network device may detect the one or more first terminals for a plurality of times, to determine the plurality of groups of profile detection data. In this way, the network device can determine the reference terminal profile based on the plurality of groups of profile detection data. In other words, in this application, the terminal is detected online, to accurately determine the corresponding terminal profile on the basis of the minimized overheads, and the different terminal profiles can be further determined for the different category information, to adapt to the category of the terminal.

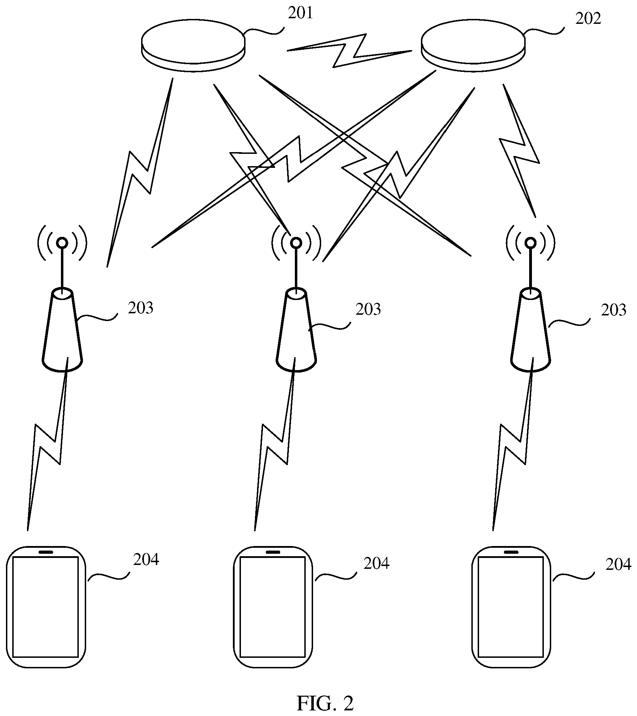

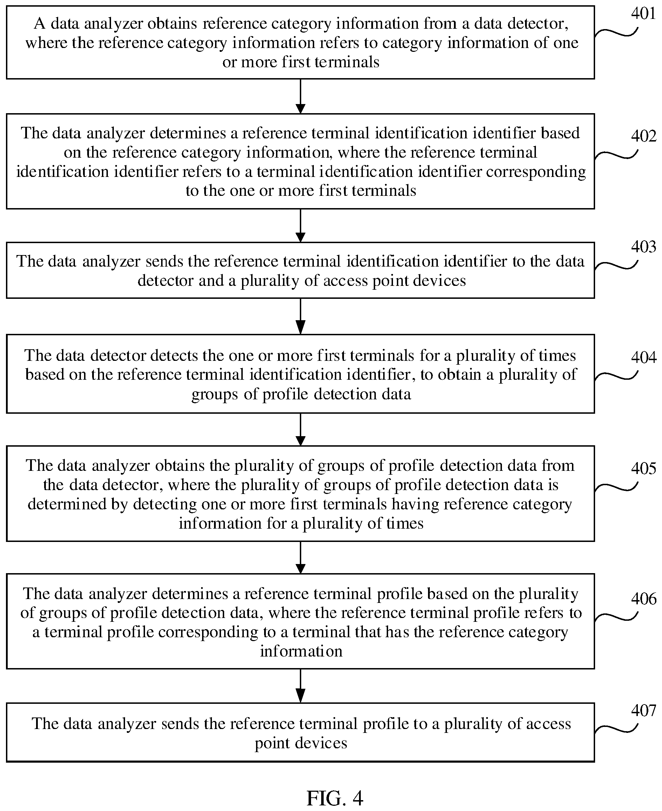

In the following, the invention is best understood in view of figures 2 and 4. The remaining embodiments, aspects and examples disclosed below are included for illustrative purposes and for facilitating the understanding of the invention.

### BRIEF DESCRIPTION OF DRAWINGS

FIG. 1 is a schematic diagram of a roaming process;
FIG. 2 is a schematic diagram of an implementation environment related to a method for determining a terminal profile according to an embodiment of this application;
FIG. 3 is a schematic diagram of a structure of a network device according to an embodiment of this application;
FIG. 4 is a flowchart of a method for determining a terminal profile according to an embodiment of this application;
FIG. 5 is a flowchart of a method for determining whether a terminal meets a detection protection condition according to an embodiment of this application;
FIG. 6 is a flowchart of another method for determining a terminal profile according to an embodiment of this application;
FIG. 7 is a schematic diagram of a structure of an apparatus for determining a terminal profile according to an embodiment of this application; and
FIG. 8 is a schematic diagram of a structure of another apparatus for determining a terminal profile according to an embodiment of this application.

### DESCRIPTION OF EMBODIMENTS

To make the objectives, technical solutions, and advantages of this application clearer, the following further describes implementations of this application in detail with reference to the accompanying drawings.

For ease of understanding, before the method for determining a terminal profile provided in embodiments of this application is explained in detail, nouns and implementation environments in embodiments of this application are first explained or described.

First, the nouns in embodiments of this application are explained.

BSS: basic service set. A service provided by a single access point (access point, AP) device is referred to as a BSS.

ESS: extended service set. A unified service provided by a plurality of access point devices that are managed by using a same access control device and that use a same service set identifier (service set identifier, SSID) is referred to as an ESS. In other words, one ESS may include a plurality of BSSs.

Association: a state in which a communication connection is established between a terminal and an access point device. A terminal is associated with an access point device, that is, the terminal accesses the access point device, and then can access the access point device, or the access point device can provide a service for the terminal.

Roaming: a process in which a terminal is handed over between different BSSs of a same ESS is referred to as roaming. One access point device corresponds to one BSS, and one ESS may include a plurality of BSSs. In other words, a process in which the terminal is switched from an association with one access point device to an association with another access point device is referred to as roaming.

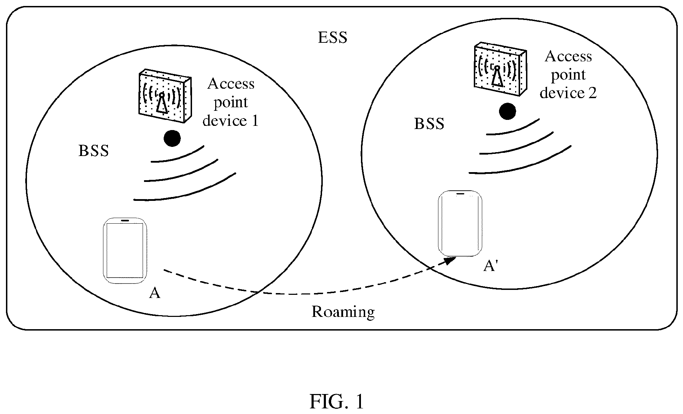

For example, refer to FIG. 1, an ESS includes two BSSs. One BSS corresponds to an access point device 1, and the other BSS corresponds to an access point device 2. At the beginning, a terminal is associated with the access point device 1 at a location point A. When the terminal moves to a location point A', the terminal is associated with the access point device 2. In other words, the terminal is associated with the access point device 1 before roaming, and is associated with the access point device 2 after roaming.

Source access point device: an access point device associated with a terminal before the terminal roams is referred to as a source access point device.

Destination access point device: an access point device associated with a terminal after the terminal roams is referred to as a destination access device.

Terminal: a mobile terminal device, also referred to as a mobile terminal. In a WLAN, a terminal is also referred to as a station (station, STA). For example, in embodiments of this application, the terminal may be a notebook computer (also referred to as a personal computer (Personal Computer, PC)), a game console, a tablet computer, a smartphone, an e-reader, a digital broadcast terminal, a message transceiver device, a personal digital assistant, a wearable device, or the like. The wearable device may be a band, a watch, or the like.

Signal strength: strength of a signal that is received by a terminal from an access point device, in dBm. Generally, signal strength is a negative value. A larger value indicates better signal quality. In most scenarios, signal quality is very good when the value is -50 or higher, and the signal quality is poor when the value is -70 or lower.

Terminal profile: a related network capability of a terminal on software or hardware is referred to as a terminal profile. Roaming optimization is used as an example. A terminal profile in roaming optimization refers to a related network capability of a terminal during roaming. For example, when a signal strength of an access point device associated with the terminal is less than a value 1, the terminal may roam. Alternatively, when a signal strength of a neighbor access point device of the terminal is greater than a value 2, the terminal may roam. Alternatively, when a value obtained by subtracting the signal strength of the associated access point device from the signal strength of the neighbor access point device of the terminal is greater than a value 3, the terminal may roam.

The following describes the implementation environments in embodiments of this application.

FIG. 2 is a schematic diagram of an implementation environment related to a method for determining a terminal profile according to an embodiment of this application. A network architecture related to the implementation environment includes a data detector 201, a data analyzer 202, a plurality of access point devices 203 (in FIG. 2, three access point devices are used to schematically represent the plurality of access point devices), and a plurality of terminals 204 (in FIG. 2, three terminals are used to schematically represent the plurality of terminals).

The data detector 201 and the data analyzer 202 are connected by using a wireless or wired network, to perform communication. The data detector 201 is further connected to the plurality of access point devices 203 separately by using a wireless or wired network, to perform communication. The data analyzer 202 is separately connected to the plurality of access point devices 203 by using a wireless or wired network, to perform communication. For each of the plurality of terminals 204, one terminal 204 may be connected to one of the plurality of access point devices 203 by using a wireless or wired network, to perform communication. To be specific, one terminal 204 may be associated with one of the plurality of access point devices 203.

The data detector 201 may send reference category information to the data analyzer 202. The reference category information refers to category information corresponding to one or more first terminals. In this way, the data analyzer 202 may identify the one or more first terminals based on the reference category information sent by the data detector 201, to determine a reference terminal identification identifier. The reference terminal identification identifier refers to a terminal identification identifier corresponding to the one or more first terminals, and may also be referred to as a model ID. Then, the data analyzer 202 may send the reference terminal identification identifier to the data detector 201 and the plurality of access devices 203.

The data detector 201 may further detect the one or more first terminals for a plurality of times based on the reference terminal identification identifier, to determine a plurality of groups of profile detection data, and send the plurality of groups of profile detection data to the data analyzer 202. In this way, the data analyzer 202 may determine a reference terminal profile based on the plurality of groups of profile detection data. The reference terminal profile refers to a terminal profile corresponding to a terminal that has the reference category information. Then, the data analyzer 202 may send the reference terminal profile to the plurality of access point devices 203.

The access point devices 203 may cooperate with the data detector 201, to detect the one or more first terminals for a plurality of times, so as to determine the foregoing plurality of groups of profile detection data. The access point devices 203 may further apply, based on the reference terminal identification identifier and the reference terminal profile that are sent by the data analyzer 202, the reference terminal profile to terminals that have the reference category information, for a comparative example, perform, based on the reference terminal identification identifier and the reference terminal profile, roaming steering on the terminals that have the reference category information.

Optionally, after applying the reference terminal profile to the terminals that have the reference category information, the access point devices 203 may further determine some log data of these terminals before and after the reference terminal profile is applied, and report the log data to the data detector 201. In this way, the data detector 201 may determine a plurality of groups of profile quality data based on the received log data. Then, the data detector 201 may send the plurality of groups of profile quality data to the data analyzer 202. The data analyzer 202 evaluates the reference terminal profile, to determine whether a corresponding terminal profile needs to be redetermined.

In embodiments of this application, in addition to the foregoing functions, the access point device 203 may further provide a communication service for a terminal 204. In other words, an access point device associated with a terminal 204 may provide the communication service for the terminal 204. For example, the terminal 204 may send a data packet to another device by using the access point device associated with the terminal 204, or may receive, by using the access point device associated with the terminal 204, a data packet or the like sent by another device.

It should be noted that the foregoing data detector 201 and the data analyzer 202 may be separately deployed on two different network devices independently, or may be simultaneously deployed on a same network device. For example, the network device may be a server having a computing capability, an access controller (access controller, AC), an access point device having a computing capability, or the like.

In addition, a network related to the implementation environment may be a WLAN. The network architecture related to the implementation environment may be deployed in a plurality of areas such as a shopping mall, a supermarket, an office building, or a parking lot.

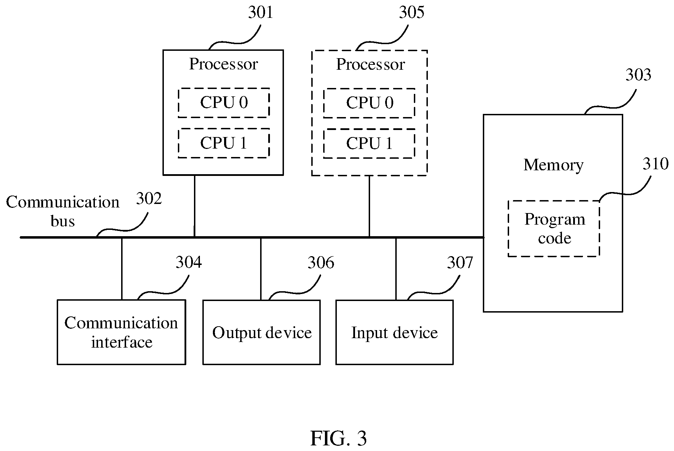

FIG. 3 is a schematic diagram of a structure of a network device according to an embodiment of this application. The network device may be the data detector 201 shown in FIG. 2, or may be the data analyzer 202 or the access point device 203. The network device may include one or more processors 301, a communication bus 302, a memory 303, and one or more communication interfaces 304.

The processor 301 may be a general-purpose central processing unit (central processing unit, CPU), a network processor (NP), or a microprocessor, or may be one or more integrated circuits configured to implement the solutions of this application, for example, an application-specific integrated circuit (application-specific integrated circuit, ASIC), a programmable logic device (programmable logic device, PLD), or a combination thereof. The foregoing PLD may be a complex programmable logic device (complex programmable logic device, CPLD), a field-programmable gate array (field-programmable gate array, FPGA), generic array logic (generic array logic, GAL), or any combination thereof.

The communication bus 302 is configured to transmit information between the foregoing components. The communication bus 302 may be classified into an address bus, a data bus, a control bus, and the like. For ease of representation, only one thick line is used to represent the bus in the figure, but this does not mean that there is only one bus or only one type of bus.

The memory 303 may be a read-only memory (read-only memory, ROM), a random access memory (random access memory, RAM), an electrically erasable programmable read-only memory (electrically erasable programmable read-only memory, EEPROM), an optical disc (including a compact disc read-only memory (compact disc read-only memory, CD-ROM), a compact disc, a laser disc, a digital versatile disc, a Blu-ray disc, or the like), a magnetic disk storage medium or another magnetic storage device, or any other medium that can be configured to carry or store expected program code in a form of an instruction or a data structure and that can be accessed by a network. However, this is not limited hereto. The memory 303 may exist independently, and be connected to the processor 301 through the communication bus 302. The memory 303 may alternatively be integrated with the processor 301.

The communication interface 304 is configured to communicate with another device or a communication network by using any transceiver-type apparatus. The communication interface 304 includes a wired communication interface, and may further include a wireless communication interface. The wired communication interface may be, for example, an Ethernet interface. The Ethernet interface may be an optical interface, an electrical interface, or a combination thereof. The wireless communication interface may be a wireless local area network (wireless local area network, WLAN) interface, a cellular network communication interface, a combination thereof, or the like.

In some embodiments, the network device may include a plurality of processors, for example, a processor 301 and a processor 305 shown in FIG. 3. Each of these processors may be a single-core processor, or may be a multicore processor. The processor herein may refer to one or more devices, circuits, and/or processing cores configured to process data (for example, computer program instructions).

During specific implementation, in an embodiment, the network device may further include an output device 306 and an input device 307. The output device 306 communicates with the processor 301, and may display information in a plurality of manners. For example, the output device 306 may be a liquid crystal display (liquid crystal display, LCD), a light-emitting diode (light emitting diode, LED) display device, a cathode ray tube (cathode ray tube, CRT) display device, or a projector (projector). The input device 307 communicates with the processor 301, and may receive an input from a user in a plurality of manners. For example, the input device 307 may be a mouse, a keyboard, a touchscreen device, or a sensing device.

In some embodiments, the memory 303 is configured to store program code 310 for executing the solutions of this application, and the processor 301 may execute the program code 310 stored in the memory 303. The program code may include one or more software modules. The network device may implement, by using the processor 301 and the program code 310 in the memory 303, a method for determining a terminal profile provided in the following embodiment in FIG. 4.

After the nouns and the implementation environments in embodiments of this application are explained, the following explains and describes in detail the method for determining a terminal profile provided in embodiments of this application. In embodiments of this application, an example in which the data analyzer and the data detector are deployed on two different network devices is used for description. In other words, an example in which the data analyzer and the data detector are used as two different devices is used for description. FIG. 4 is a flowchart of a method for determining a terminal profile according to an embodiment of this application. The method includes the following steps.

Step 401: A data analyzer obtains reference category information from a data detector, where the reference category information refers to category information of one or more first terminals.

It should be noted that when the reference category information refers to the category information of the first terminals, the first terminals may belong to a same category. In other words, the first terminals may have same category information, and the category information may be referred to as reference category information. In some embodiments, the reference category information may include a model identifier, or the reference category information may include a model identifier and a version identifier of an operating system. In other words, the first terminals may be the same in model, or the first terminals are the same in both model and operating system version. Certainly, the foregoing merely describes content included in the reference category information as an example. In some other embodiments, the reference category information may further include other information, for example, a type of a terminal. The type may refer to that the terminal is a mobile phone, a notebook computer, or another type of device.

It should be noted that the version identifier of the operating system may refer to an identifier that can identify a type of the operating system and a version of the operating system. For example, the version identifier of the operating system may be IOS 8.1.1, Android 4.3.1, or the like.

In some embodiments, a packet for communication between a terminal and another device usually carries information such as a media access control (media access control, MAC) address, model description information, version description information of an operating system, and a terminal type of the terminal. Therefore, the data detector may extract the information from packets, and further determine the reference category information. For example, when a data packet sent by the terminal is an http packet, the http packet may carry the MAC address of the terminal, and a user-agent field of the http packet may carry the model description information of the terminal, the version description information of the operating system, and the terminal type. Therefore, when the reference category information includes the model identifier, the data detector may obtain the model description information of the terminal from the http packet, and further determine a model identifier of the terminal. When the reference category information includes the model identifier and the version identifier of the operating system, the data detector may obtain the model description information and the version description information of the operating system of the terminal from the http packet, and further determine the model identifier and the version identifier of the operating system of the terminal. For example, the model description information may be Huawei P30, iPhone 8, or the like. The version description information of the operating system may be Android 8.0.0, Android 8.0.1, or the like.

Terminals of different models have different model description information. Therefore, the data detector can distinguish between the terminals of different models based on the different model description information. To be specific, a first reference terminal is used as an example, the data detector may directly use model description information of the first reference terminal as a model identifier of the first reference terminal. Certainly, the data detector may also distinguish between a model of the first reference terminal based on the model description information of the first reference terminal, and further allocate a corresponding model identifier to the first reference terminal. Similarly, operating systems of different versions have different version description information. Therefore, the data detector may distinguish between the operating systems of different versions based on the different version description information. To be specific, the first reference terminal is used as an example, the data detector may directly use version description information of an operating system of the first reference terminal as a version identifier of the operating system of the first reference terminal. Certainly, the data detector may also distinguish between the operating system of the first reference terminal based on the version description information of the operating system of the first reference terminal, and further allocate a version identifier of a corresponding operating system to the first reference terminal. The first reference terminal refers to one of the one or more first terminals.

After the data detector determines the reference category information, the data detector may store the reference category information, and send the reference category information to the data analyzer when the data analyzer subsequently requests the category information of the one or more first terminals. Certainly, after the data detector determines the reference category information, the data detector may directly send the reference category information to the data analyzer without requiring the data analyzer to request the reference category information, to reduce a quantity of interactions between the data analyzer and the data detector.

It should be noted that, regardless of whether the data analyzer actively requests the reference category information from the data detector or the data detector actively sends the reference category information to the data analyzer, after obtaining the reference category information, the data analyzer may determine that terminal identification needs to be performed on the one or more terminals subsequently, and further determine a terminal profile corresponding to the one or more first terminals.

In addition, after obtaining the reference category information from the data detector, the data analyzer may further preprocess the reference category information, for example, feature extraction, data cleansing, format conversion, and supplementation and deletion of abnormal data. For example, the reference category information sent by the data detector to the data analyzer is of a text type. In this way, the data analyzer needs to perform natural language processing on the reference category information of the text type, to extract needed data. These preprocessing operations may be set based on a requirement. This is not limited in embodiments of this application.

Step 402: The data analyzer determines a reference terminal identification identifier based on the reference category information, where the reference terminal identification identifier refers to a terminal identification identifier corresponding to the one or more first terminals.

In some embodiments, the data analyzer may determine, from a plurality of pieces of stored category information, target category information that is most similar to the reference category information, and determine a terminal identification identifier corresponding to the target category information as the reference terminal identification identifier. Each of the plurality of pieces of category information corresponds to a terminal identification identifier

Because the data analyzer stores the plurality of pieces of category information in advance, and each piece of category information corresponds to a terminal identification identifier, after obtaining the reference category information, the data analyzer may match the reference category information with the plurality of pieces of category information, to determine, from the plurality of pieces of category information, one piece of category information that is most similar to the reference category information, use the determined category information as the target category information, and further determine the terminal identification identifier corresponding to the target category information as the reference terminal identification identifier. The reference terminal identification identifier may also be referred to as a terminal identification result corresponding to the one or more first terminals.

It should be noted that, when the data analyzer matches the reference category information with the plurality of pieces of category information, any matching method may be used, provided that the piece of category information that is most similar to the reference category information can be determined from the plurality of pieces of category information.

In addition, a terminal identification identifier may be determined by using one piece of or combining more pieces of information such as a MAC address, a terminal type, a terminal model, and a version of an operating system of a terminal, or certainly, may be allocated depending on difference of the information.

It should be noted that the data analyzer may not only determine, in the foregoing manner, the reference terminal identification identifier based on the reference category information, but also determine the reference terminal identification identifier in another manner. For example, the data analyzer may determine whether there is category information that is the same as the reference category information in category information corresponding to a known terminal identification identifier. If there is no category information that is the same as the reference category information, the data analyzer may directly allocate a terminal identification identifier, namely, the reference terminal identification identifier, to the one or more first terminals.

Step 403: The data analyzer sends the reference terminal identification identifier to the data detector and a plurality of access point devices. The plurality of access point devices refer to access point devices that are capable of communicating with the data analyzer.

The data analyzer sends the reference terminal identification identifier to the data detector, to enable the data detector to subsequently detect the one or more first terminals based on the reference terminal identifier. The data analyzer sends the reference terminal identifier to the plurality of access point devices, to enable the access point devices to subsequently apply a corresponding terminal profile to a terminal. The following describes content in the two aspects one by one, and details are not described herein again.

It should be noted that the plurality of access point devices may refer to all access point devices that are capable of communicating with the data analyzer, or may refer to some access point devices that are capable of communicating with the data analyzer.

Step 404: The data detector detects the one or more first terminals for a plurality of times based on the reference terminal identification identifier, to obtain a plurality of groups of profile detection data.

After the data detector receives the reference terminal identification identifier sent by the data analyzer, the data detector may detect the one or more first terminals for a plurality of times based on the reference terminal identification identifier. The first reference terminal is used as an example, the data detector constructs a detection instruction based on the reference terminal identification identifier. The data detector sends the detection instruction to the first reference terminal by using an access point device associated with the first reference terminal. The data detector receives, by using the access point device associated with the first reference terminal, log data that is reported by the first reference terminal before and after the detection instruction is received. The data detector determines a group of profile detection data based on the log data that is reported by the first reference terminal before and after the detection instruction is received.

In other words, the data detector may construct the detection instruction, and the detection instruction is used to detect a network capability of the first reference terminal. In this way, after the first reference terminal reports the log data, the group of profile detection data may be determined based on the log data, to perform subsequent terminal profile identification.

It should be noted that, for terminal profiles of different types, information carried in detection instructions constructed by the data detector may be different, so that information included in a group of profile detection data may also be different.

When a terminal profile that needs to be determined is a profile related to link signal quality measurement, that is, when a profile type of the terminal profile that needs to be determined is a link quality measurement type, the detection instruction may carry the reference terminal identification identifier, an identifier of a link, measurement time, and the like. In this way, the first reference terminal is used as an example, a corresponding group of profile detection data may include terminal description information, access point description information, at least one protocol support label, and corresponding protocol description data. The terminal description information is used to describe related information of the first reference terminal, for example, a MAC address and a terminal identification identifier. The access point description information is used to describe related information of an access point device associated with the first reference terminal, for example, an identifier of the access point device. The protocol support label is used to indicate whether a corresponding terminal supports a corresponding link signal quality measurement protocol. The protocol description data is used to describe the corresponding link signal quality measurement protocol. For example, the profile detection data includes a label indicating whether a link measurement protocol 802.11k is supported, a label indicating whether a link measurement protocol 802.11h is supported, description data of the link measurement protocol 802.11k, description data of the link measurement protocol 802.11h, and the like.

When, in a comparative example, a terminal profile that needs to be determined is a profile related to roaming steering, that is, when, in a comparative example, a profile type of the terminal profile that needs to be determined is a roaming steering type, because roaming steering may comply with different protocols, for example, a 11v steering protocol, a Deauth protocol, and a CSA protocol, for different steering protocols, information carried in the detection instruction may be different, and information included in the profile detection data may also be different.

For the 11v steering protocol, the detection instruction may carry the reference terminal identification identifier, an identifier of a first access point device, an identifier of a second access point device, and the like. The first access point device refers to an access point device currently associated with the first reference terminal. The second access point device refers to an access point device that needs to be associated after roaming of the first reference terminal is steered. In this way, a corresponding group of profile detection data may include terminal description information, source access point description information, destination access point description information, a roaming steering label, and steering feature data. The source access point device description information is used to describe related information of an access point device associated with the terminal before the terminal roams, such as the identifier of the first source access point device and an identifier of a BSS. The destination access point description information is used to describe related information of an access point device associated with the terminal after the terminal roams, for example, the identifier of the second access point device and an identifier of a BSS. The roaming steering label is used to indicate whether roaming steering detection on a corresponding terminal succeeds. The steering feature data is used to describe network information when the roaming steering detection is performed on the corresponding terminal and/or a steering manner of performing the roaming steering detection, for example, signal strength corresponding to the first access point device and signal strength corresponding to the second access point device. Certainly, other data may be further included, for example, roaming steering time, and load of the second access point device after steering succeeds.

For the Deauth protocol, the detection instruction may carry control information for forcing the first reference terminal to get offline, and the profile detection data may include a label indicating whether the first reference terminal no longer get online after being forced to get offline, a time interval from being forced to get offline to getting online again, a signal strength difference between access point devices associated before and after roaming, whether the access point devices associated before and after roaming are in a same cell, and the like.

For the CSA protocol, the detection instruction may carry control information for steering roaming of the first reference terminal, and the profile detection data may include a label indicating whether CSA roaming is supported, a time interval for roaming from an associated access point device to another access point device, and the like.

In another comparative example, a terminal profile that needs to be determined is a profile related to network detection, that is, when a profile type of the terminal profile that needs to be determined is a network detection type, the detection instruction may carry related information of a detection capability that currently needs for detection, for example, related information of a frequency band and related information of a channel. In this way, the profile detection data may include terminal description information, access point description information, a detection support label, and detection description data. The terminal description information is used to describe related information of the terminal, for example, a MAC address and a terminal identification identifier. The access point description information is used to describe related information of an access point device associated with the terminal, for example, an identifier of the access point device. The detection support label is used to indicate whether a corresponding terminal supports a corresponding detection capability. The detection description data is used to describe the corresponding detection capability. The detection capability includes a frequency band and/or a channel, for example, a 2.4G or 5G frequency band.

The following uses the 11v steering protocol as a comparative example to describe a process in which the data detector detects the one or more first terminals for a plurality of times based on the reference terminal identification identifier.

The first reference terminal is used as a comparative example, after the data detector receives the reference terminal identification identifier sent by the data analyzer, the data detector constructs a roaming steering instruction. The roaming steering instruction carries the identifier of the second access point device. The data detector sends the roaming steering instruction to the first access point device, so that the second access point device sends the roaming steering instruction to the first reference terminal, to guide the first reference terminal to roam from the first access point device to the second access point device. In a roaming steering process, the first reference terminal may report the log data obtained before and after roaming to the data detector. In this way, the data detector may determine the group of profile detection data based on the received log data.

In some comparative examples, the data detector may obtain signal strength corresponding to neighbor access point devices of the first access point device, and select, based on the signal strength corresponding to these neighbor access point devices, an access point device from these neighbor access point devices as the second access point device, namely, an access point device that needs to be associated after roaming of the first reference terminal is steered. In addition, for the first reference terminal, the data detector may perform roaming steering detection on the first reference terminal for one or more times, and second access point devices determined during each roaming steering detection may be different. In this way, a terminal profile with high accuracy may be determined based on a plurality of finally determined groups of profile detection data.

The data detector may randomly select an access point device from these neighbor access point devices as the second access point device, or may select, according to a rule, an access point device from these neighbor access point devices as the second access point device. For example, the data detector may select, from these neighbor access point devices, neighbor access point devices whose signal strength falls within the target strength range, and then randomly select, from the selected neighbor access point devices, an access point device as the second access point device.

It should be noted that, because the first reference terminal of the comparative example has a built-in roaming rule, the roaming rule may be the same as or different from a reference roaming steering condition. Therefore, after the roaming steering detection is performed in a comparative example on the first reference terminal, the first reference terminal may roam or may not roam. In other words, after the data detector performs the roaming steering detection on the first reference terminal by using the first access point device, the first reference terminal further needs to determine, according to the built-in roaming rule of the first reference terminal, whether to roam. Therefore, the profile detection data may generally include information such as related information of a reference terminal, related information of the first access point device, related information of the second access point device, roaming steering time, and whether roaming steering succeeds.

For example, the profile detection data may include the reference terminal identification identifier, the reference category information, an identifier of a BSS of the first access point device, an identifier of a BSS of the second access point device, the signal strength corresponding to the first access point device, the signal strength corresponding to the second access point device, the roaming steering time, a MAC address of the reference terminal, a label indicating whether roaming steering succeeds, and the like.

It should be noted that the foregoing profile detection data listed above is merely an example. In some other embodiments, the profile detection data may further include other data, for example, data such as a frequency band, a channel, load of an access point device, and terminal traffic.

An identifier of a BSS of an access point device may be a MAC address of the access point device, or certainly, may be other information that can uniquely represent the BSS of the access point device.

In embodiments of this application, the data detector does not unconditionally construct the detection instruction for the first reference terminal, to detect the first reference terminal. Instead, the data detector needs to determine whether the first reference terminal meets a detection protection condition, to construct the detection instruction only when the first reference terminal meets the detection protection condition, so as to detect the first reference terminal. For profiles of different types, detection protection conditions are usually different.

The 11v steering protocol is used as a comparative example, that the data detector determines, based on the reference terminal identification identifier, whether the first reference terminal meets the detection protection condition includes: The data detector obtains first signal strength and second signal strength. The first signal strength refers to signal strength corresponding to the first access point device. The second signal strength refers to signal strength corresponding to the second access point device. If the data detector determines that the first signal strength is within a reference strength range, and a difference between the first signal strength and the second signal strength is greater than a strength threshold, a steering protection parameter is determined based on the reference terminal identification identifier. The steering protection parameter is used to indicate a maximum degree of performing roaming steering detection on the first reference terminal. If the steering protection parameter meets a steering protection condition, and the first reference terminal is outside a protection whitelist, it is determined that the first reference terminal meets the detection protection condition.

If the first signal strength is not within the reference strength range, or the first signal strength is within the reference strength range and the difference between the first signal strength and the second signal strength is not greater than the strength threshold, or the first signal strength is within the reference strength range, the difference between the first signal strength and the second signal strength is greater than the strength threshold, but the steering protection reference does not meet the steering protection condition, or the first signal strength is within the reference strength range, the difference between the first signal strength and the second signal strength is greater than the strength threshold, and the steering protection reference meets the steering protection condition, but the first reference terminal is not outside the protection whitelist, it may be determined that the first reference terminal does not meet the detection protection condition.

In some comparative examples, the steering protection parameter includes a total quantity of times of steering for a terminal that has the reference category information, and the steering protection condition includes that the total quantity of times of steering is not greater than a quantity-of-times threshold; and/or the steering protection parameter includes an average steering time interval for the first reference terminal, and the steering protection condition includes that the average steering time interval is greater than a duration threshold; and/or the steering protection parameter includes a total quantity of terminals on which the first access point device performs roaming steering detection, and the steering protection condition includes that the total quantity of the terminals is not greater than a quantity threshold.

It should be noted that the reference strength range, the strength threshold, and the protection whitelist may be set based on a requirement. This is not limited in embodiments of this application. In addition, the foregoing method for determining whether the first reference terminal meets the detection protection condition is merely an example. In embodiments of this application, another method may be used to determine whether the first reference terminal meets the detection protection condition. For example, the data detector may directly determine the steering protection parameter based on the reference terminal identification identifier. If the steering protection parameter meets the steering protection condition and the first reference terminal is outside the protection whitelist, it is determined that the first reference terminal meets the detection protection condition.

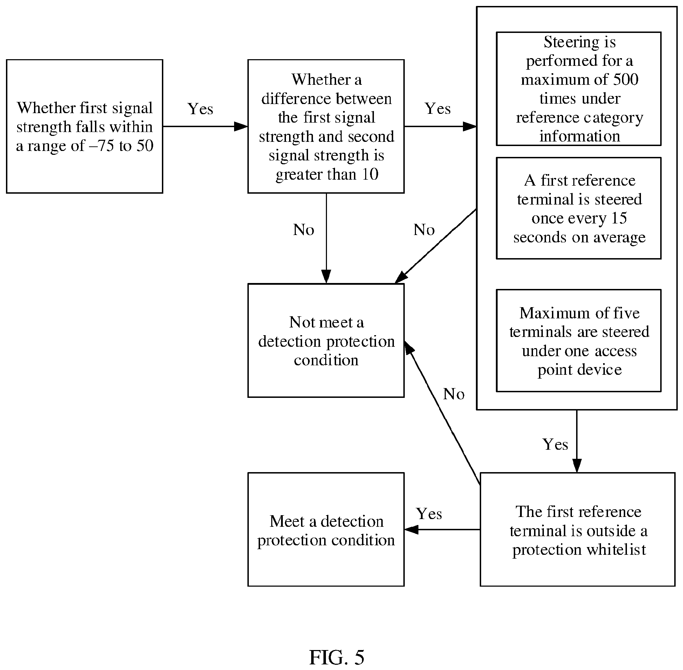

For example, as shown in FIG. 5, the data detector determines that the first signal strength falls within a range of -75 to 50. If the data detector determines that the first signal strength does not fall within the range of -75 to 50, the data detector determines that the first reference terminal does not meet the detection protection condition. If the data detector determines that the first signal strength falls within the range of -75 to 50, the data detector determines whether the difference between the first signal strength and the second signal strength is greater than 10, and determines that the first reference terminal does not meet the detection protection condition if the difference between the first signal strength and the second signal strength is not greater than 10. If the difference between the first signal strength and the second signal strength is greater than 10, whether at least one of the following three conditions is met is determined: steering is performed for a maximum of 500 times under the reference category information, the first reference terminal is steered once every 15 seconds on average, and a maximum of five terminals are steered under one access point device. If at least one of the following three conditions is not met, it is determined that the first reference terminal does not meet the detection protection condition. If at least one of the following three conditions is met, whether the first reference terminal is outside the protection whitelist is determined. If the first reference terminal is not outside the protection whitelist, it is determined that the first reference terminal does not meet the detection protection condition. If the first reference terminal is outside the protection whitelist, it is determined that the first reference terminal meets the detection protection condition.

Step 405: The data analyzer obtains the plurality of groups of profile detection data from the data detector, where the plurality of groups of profile detection data is determined by detecting one or more first terminals having reference category information for a plurality of times.

In some embodiments, after determining the plurality of groups of profile detection data in Step 404, the data detector may directly send the plurality of groups of profile detection data to the data analyzer. Certainly, after determining the plurality of groups of profile detection data in Step 404, the data detector may store the plurality of groups of profile detection data. Then, when the data analyzer requests the plurality of groups of profile detection data, the data detector sends the plurality of groups of profile detection data to the data analyzer.

It should be noted that, when detecting the one or more first terminals for a plurality of times, the data detector may store a corresponding detection record and log data reported by a corresponding terminal. When a plurality of groups of profile detection data need to be subsequently sent to the data analyzer, data integration is performed based on the stored detection record and log data, to determine the plurality of groups of profile detection data.

In addition, after obtaining the plurality of groups of profile detection data from the data detector, the data analyzer may further preprocess the plurality of groups of profile detection data, for example, feature extraction, data cleansing, format conversion, and supplementation and deletion of abnormal data. These preprocessing operations may be set based on a requirement. This is not limited in embodiments of this application.

Step 406: The data analyzer determines a reference terminal profile based on the plurality of groups of profile detection data, where the reference terminal profile refers to a terminal profile corresponding to a terminal that has the reference category information.

In embodiments of this application, the data analyzer may determine the reference terminal profile in a plurality of manners based on the plurality of groups of profile detection data. The following describes one of the manners.

The data analyzer extracts corresponding key feature data from each of the plurality of groups of profile detection data based on a reference profile type. The reference profile type refers to a type corresponding to a terminal profile that currently needs to be determined. The data analyzer determines the reference terminal profile based on a plurality of pieces of extracted key feature data.

It should be noted that the data analyzer may determine the reference terminal profile based on the plurality of pieces of extracted key feature data in a plurality of methods. For example, the data analyzer may determine the reference terminal profile based on a statistical model, or may determine the reference terminal profile based on a supervised learning model or an unsupervised learning model. The statistical model may include an average model, a median model, a mode model, a percentage model, and the like. The supervised learning model may include a logistic regression model, a support vector machine model, a neural network model, and the like. The unsupervised learning model may include a clustering model, a binary classification model, an N-sigma threshold model, and the like.

In some embodiments, the data analyzer may determine, from a stored correspondence between a profile type and a model based on the reference profile type, a corresponding model as a profile determining model. The profile determining model refers to a model for currently determining the reference terminal profile. In this way, the data analyzer may perform incremental learning based on the plurality of pieces of extracted key feature data by using the profile determining model, to obtain the reference terminal profile, so as to ensure high accuracy of the determined reference terminal profile. In addition, in embodiments of this application, the one or more first terminals are detected to obtain the plurality of groups of profile detection data, so that after the reference terminal profile is determined based on the plurality of groups of profile detection data, the reference terminal profile can be closer to a network capability of the terminal, to improve the accuracy of the reference terminal profile.

When performing incremental learning based on the plurality of pieces of extracted key feature data by using the profile determining model, the data analyzer may randomly select a part of data from the plurality of pieces of extracted key feature data, learn a feature of the part of data by using the profile determining model, and then determine a terminal profile. If the determined terminal profile is not converged, the data analyzer may continue to learn a feature of other data by using the profile determining model until the determined terminal profile is converged, and use the converged terminal profile as the reference terminal profile.

Convergence of a terminal profile may refer to that the terminal profile remains unchanged, or a variation of the terminal profile is less than a specified value. The specified value is very small.

It should be noted that when reference profile types are different, extracted key feature data is also different. When, like in the present invention, the reference profile type is a link quality measurement type, the key feature data includes a protocol support label and protocol description data, the protocol support label is used to indicate whether a corresponding terminal supports a corresponding link signal quality measurement protocol, and the protocol description data is used to describe the corresponding link signal quality measurement protocol. When, in a comparative example, the reference profile type is a roaming steering type, the key feature data includes a roaming steering label and steering feature data. The roaming steering label is used to indicate whether roaming steering detection on a corresponding terminal succeeds (that is, whether steering of roaming of the terminal succeeds). The steering feature data is used to describe network information when the roaming steering detection is performed on the corresponding terminal and/or a steering manner of performing the roaming steering detection. The network information when the roaming steering detection is performed on the corresponding terminal may include access point data and terminal data. The access point data may include network information of an access point device, such as signal strength, a load, a channel, a quantity of associated terminals, and a frequency band. If the steering of the roaming succeeds, the access point data may include network information of an access point device associated with the terminal before and/or after the terminal roams. If the steering of the roaming fails, the access point data may include network information of an associated access point device and network information of a steered destination neighbor access point device when roaming steering is performed on the terminal. The terminal data may include a service type, traffic, and the like of a service performed by the terminal when the roaming steering detection is performed on the terminal. The steering manner of performing the roaming steering detection may include a steering protocol used for roaming steering detection, a protocol parameter value of the steering protocol, a steering frequency, and the like. When, in another comparative example, the reference profile type is a network detection type, and the key feature data includes a detection support label and detection description data. The detection support label is used to indicate whether a corresponding terminal supports a corresponding detection capability. The detection description data is used to describe the corresponding detection capability. The detection capability includes a frequency band and/or a channel.

The 11v steering protocol is used as a comparative example. The key feature data extracted by the data analyzer from the plurality of groups of profile detection data may include the roaming steering label and the steering feature data. The roaming steering label is used to indicate whether the roaming steering detection on the corresponding terminal succeeds. The steering feature data is used to describe the network information when the roaming steering detection is performed on the corresponding terminal and/or the steering manner of performing the roaming steering detection. For example, the steering feature data may include a model identifier, a version identifier of an operating system, a terminal type, signal strength corresponding to an access point device associated with the terminal before roaming, and signal strength corresponding to an access point device associated with the terminal after roaming.

When, like in the invention, the reference profile type is the link quality measurement type, the reference terminal profile may include the reference category information and protocol support data. The protocol support data is used to describe a link quality measurement protocol supported by the terminal. If the reference terminal profile is the terminal profile corresponding to the terminal that has the reference category information, the terminal that has the reference category information may support the link quality measurement protocol described in the protocol support data.

When the reference profile type is the roaming steering type of the comparative example, the reference terminal profile may include the reference category information and a roaming steering condition (for example, an applicable roaming network condition standard) and/or an applicable steering manner that are/is applicable to the one or more detected first terminals. A roaming network condition refers to a network condition that needs to be satisfied by the two access point devices when the terminal roams from one access point device to another access point device. The network condition may be signal strength, channel utilization, a frequency band, a quantity of associated terminals, channel bandwidth, or the like. For example, the network condition standard may be a signal strength standard, for example, one or more of a signal strength threshold corresponding to a source access point device, a signal strength threshold corresponding to a destination access point device, or a signal strength gain threshold between the source access point device and the destination access point device. Subsequently, a person skilled in the art may determine, for the reference terminal profile, the roaming steering condition and/or the applicable steering manner corresponding to the terminal that has reference category information, and further perform roaming steering on this type of terminal according to the roaming steering condition and/or the applicable steering manner.

When the reference profile type is the network detection type of another comparative example, the reference terminal profile may include the reference category information and capability support data. The capability support data is used to describe a detection capability supported by the terminal. If the reference terminal profile is the terminal profile corresponding to the terminal that has the reference category information, the terminal that has the reference category information may support the detection capability described in the capability support data. For example, if the capability support data includes the 5G frequency band, it may be determined that the terminal that has the reference category information can support the 5G frequency band.

For comparison, the plurality of groups of profile detection data obtained by the data analyzer from the data detector may be shown in the following Table 1. The roaming steering label and the steering feature data that are extracted by the data analyzer from each group of the plurality of groups of profile detection data may be shown in the following Table 2. It is assumed that the profile determining model is a binary classification model. In this case, the data analyzer may perform incremental learning based on data in Table 2 by using the binary classification model, to obtain a reference terminal profile, as shown in the following Table 3.

**Table 1**

| M-ID | Category information | MAC | Source ID | Source signal strength | Destination ID | Destination signal strength | Roaming steering label | T |
|---|---|---|---|---|---|---|---|---|
| 1186 | Information 1 | MAC 1 | ID 11 | -59 | ID 21 | -67 | 0 | T1 |
| 1186 | Information 1 | MAC 1 | ID 11 | -62 | ID 22 | -71 | 0 | T2 |
| 1186 | Information 1 | MAC 2 | ID 12 | -71 | ID 23 | -66 | 1 | T3 |
| 1186 | Information 1 | MAC 3 | ID 13 | -66 | ID 24 | -71 | 0 | T4 |

**Table 2**

| M-ID | Category information | Source signal strength | Destination signal strength | Roaming steering label |
|---|---|---|---|---|
| 1186 | Information 1 | -59 | -67 | 0 |
| 1186 | Information 1 | -62 | -71 | 0 |
| 1186 | Information 1 | -71 | -66 | 1 |
| 1186 | Information 1 | -66 | -71 | 0 |

**Table 3**

| M-ID | Category information | Source strength threshold | Destination strength threshold | Strength gain threshold |
|---|---|---|---|---|
| 1186 | Information 1 | -50 | -69 | -17 |

In Table 1 to Table 3, M-ID refers to a terminal identification identifier. MAC refers to a MAC address of a terminal. Source ID refers to an identifier of a BSS of a source access point device. Source signal strength refers to signal strength corresponding to the source access point device. Destination ID refers to an identifier of a BSS of a destination access point device. Destination signal strength refers to signal strength corresponding to the destination access point device. T refers to roaming steering time. Source strength threshold refers to a threshold that is used for being compared with signal strength of the source access point device. Destination strength threshold is a threshold that is used for being compared with signal strength of the destination access point device. Strength gain threshold is a threshold that is used for being compared with a difference between the signal strength of the source access point device and the signal strength of the destination access point device.

After the data analyzer determines the reference terminal profile in a roaming steering detection manner of the comparative example, the data analyzer may correspondingly store the feature data of the one or more first terminals and the reference terminal profile. In this way, for another terminal, for example, for one or more target terminals, when a terminal profile corresponding to the one or more target terminals is determined, terminal feature data may be directly obtained. The terminal feature data is used to describe a feature of one target terminal or a common feature of a plurality of target terminals. The data analyzer determines, from the plurality of pieces of stored feature data, target feature data that is most similar to the terminal feature data. Each of the plurality of pieces of feature data corresponds to a terminal profile. Terminal profiles corresponding to the plurality of pieces of feature data include the reference terminal profile. In other words, the terminal profiles corresponding to the plurality of pieces of feature data may be determined by roaming steering detection. Then, the data analyzer determines a terminal profile corresponding to the target feature data as a terminal profile of the one or the plurality of target terminals. In this way, a speed and efficiency of determining the terminal profile can be improved, and the efficiency can be further improved when there are a large quantity of operating system versions.

Because the data analyzer stores the plurality of pieces of feature data in advance, and each piece of feature data corresponds to a terminal profile, after obtaining the terminal feature data, the data analyzer may match the terminal feature data with the plurality of pieces of feature data, to determine, from the plurality of pieces of feature data, one piece of feature data that is most similar to the terminal feature data, use the determined feature data as the target feature data, and further determine the terminal profile corresponding to the target feature data as the terminal profile of the one or more target terminals.

The terminal feature data includes a part or all of the category information, or may include some other data other than the category information. For example, the terminal feature data may include a terminal type, a model identifier, a version identifier of an operating system, and the like.

In addition, when the data analyzer matches the terminal feature data with the plurality of pieces of feature data, any matching method may be used, provided that the piece of feature data that is most similar to the terminal feature data can be determined from the plurality of pieces of feature data.

Step 407: The data analyzer sends the reference terminal profile to a plurality of access point devices. The plurality of access point devices refer to access point devices that are capable of communicating with the data analyzer.

It should be noted that the plurality of access point devices may refer to all access point devices that are capable of communicating with the data analyzer, or may refer to some access point devices that are capable of communicating with the data analyzer.

After the data analyzer sends the reference terminal profile to the plurality of access point devices, the access point device may apply the reference terminal profile to the terminal that has the reference category information.

Optionally, after sending the reference terminal profile to the plurality of access point devices, the data analyzer may further evaluate, by using the following steps (1) to (4), terminal profiles corresponding to a plurality of second terminals.

(1): The data analyzer obtains a plurality of groups of profile quality data from the data detector. The plurality of groups of profile quality data refers to quality data obtained before and after the reference terminal profile is applied to the plurality of second terminals that have the reference category information.

Based on the foregoing description, after the data analyzer sends the reference terminal profile to the plurality of access point devices, the access point device may apply the reference terminal profile to the terminal that has the reference category information. In a process in which the access point device applies the reference terminal profile to the terminal that has the reference category information, the data detector may determine the plurality of groups of profile quality data. After the data detector determines the plurality of groups of profile quality data, in one aspect, the data detector may directly send the plurality of groups of profile quality data to the data analyzer, to enable the data analyzer to evaluate, based on the plurality of groups of profile quality data, the terminal profiles corresponding to the plurality of second terminals. In another aspect, the data detector may store the plurality of groups of profile quality data, and sends the plurality of groups of profile quality data to the data analyzer when the data analyzer subsequently requests the plurality of groups of profile quality data.

In some embodiments, a second terminal periodically reports log data of the second terminal to an access point device associated with the second terminal. The access point device forwards the log data reported by the second terminal to the data detector. Because the access point device applies the reference terminal profile to the second terminal, the data detector may determine the profile quality data by using the log data reported by the second terminal.

A second reference terminal is used as an example, an implementation process in which the data detector determines the profile quality data includes: The data detector determines a moment at which the second reference terminal applies the reference terminal profile, to obtain a profile application moment. The second reference terminal is one of the plurality of second terminals. The data detector may determine a group of profile quality data based on the profile application moment by using log data reported by the second reference terminal.

It should be noted that the group of profile quality data may include one or more pieces of quality indicator data. The 11v steering protocol is used as an example, the one or more pieces of quality indicator data may include a roaming success rate, a signal gain before and after roaming, and the like. In addition, in addition to the one or more pieces of quality indicator data, the group of profile quality data may further include a reference terminal identification identifier, a MAC address of a terminal, reference category information, and the like.

In addition, after obtaining the plurality of groups of profile quality data from the data detector, the data analyzer may further preprocess the plurality of groups of profile quality data, for example, feature extraction, data cleansing, format conversion, and supplementation and deletion of abnormal data. These preprocessing operations may be set based on a requirement. This is not limited in embodiments of this application.

(2): The data analyzer determines one or more third terminals from the plurality of second terminals based on the plurality of groups of profile quality data. The one or more third terminals refer to a terminal, in the plurality of second terminals, whose quality is not improved after the reference terminal profile is applied.

In some embodiments, the data analyzer determines, based on the one or more pieces of quality indicator data included in each of the plurality of groups of profile quality data, a category split value corresponding to each of the plurality of second terminals. The category split value is used to represent roaming quality of a corresponding terminal. The data analyzer selects, from the plurality of second terminals, a second terminal whose corresponding category split value is greater than or equal to a split threshold, to obtain the one or more third terminals.

It should be noted that different quality indicator data may comply with different quality standards. For example, for the roaming success rate, when the roaming success rate is less than a success rate threshold, it is determined that the roaming success rate does not meet a quality standard. When the roaming success rate is greater than or equal to the success rate threshold, it is determined that the roaming success rate meets the quality standard. For the signal gain before and after roaming, when the signal gain before and after roaming is less than a gain threshold, it is determined that the signal gain before and after roaming meets the quality standard. When the signal gain before and after roaming is greater than or equal to the gain threshold, it is determined that the signal gain before and after roaming does not meet the quality standard.

In some embodiments, for each of the plurality of groups of profile quality data, the data analyzer may select, from the group of profile quality data, quality indicator data that does not meet the quality standard, constitute a vector, referred to as a first vector, by using the selected quality indicator data, and constitute a vector, referred to as a second vector, by using an indicator threshold corresponding to the selected quality indicator data. A distance between the first vector and the second vector is determined, and the determined distance is used as the category split value of a second terminal corresponding to the group of profile quality data.

It should be noted that the distance between the first vector and the second vector may be a Euclidean distance, a Mahalanobis distance, a Manhattan distance, a Chebyshev distance, or the like.

In addition, the split threshold may be set based on a requirement. This is not limited in embodiments of this application.

(3): The data analyzer reallocates a terminal identification identifier to the one or more third terminals, and redetermines a terminal profile corresponding to the one or more third terminals.

A smaller category split value indicates better corresponding communication quality, and a larger category split value indicates poorer corresponding communication quality. Therefore, after selecting, from the plurality of second terminals, the second terminal whose corresponding category split value is greater than or equal to the split threshold, the data analyzer may use the selected second terminal as the one or more third terminals, to reallocate the terminal identification identifier to the one or more third terminals, and redetermine the corresponding terminal profile.

It should be noted that, based on the foregoing description, after the one or more first terminals are detected for a plurality of times to determine the plurality of groups of profile detection data, accuracy of the terminal profile determined in an incremental learning manner is high. Therefore, in embodiments of this application, the data analyzer may redetermine, in the incremental learning manner according to the foregoing steps 403 to 406, the terminal profile corresponding to the one or more third terminals.

For example, the 11v steering protocol is used as an example, the plurality of groups of profile quality data obtained by the data analyzer from the data detector may be shown in the following Table 4, and a category split value determined by the data analyzer for each group of profile quality data may be shown in Table 5. It is assumed that the split threshold is 0.8. Because category split values corresponding to a terminal in the second row and a terminal in the third row in Table 5 are greater than or equal to the split threshold, a terminal identification identifier 11860 may be reallocated to the terminal in the second row and the terminal in the third row, and terminal profiles corresponding to the two terminals are redetermined.

**Table 4**

| M-ID | MAC | Category information | Roaming steering success rate | Signal gain before and after roaming |
|---|---|---|---|---|
| 1186 | MAC 1 | Information 1 | 0.18 | 0 |
| 1186 | MAC 2 | Information 1 | 0.89 | 5 |
| 1186 | MAC 3 | Information 1 | 0.9 | 10 |
| 1186 | MAC 4 | Information 1 | 0.28 | 6 |

**Table 5**

| M-ID | MAC | Category information | Category split value | New M-ID |
|---|---|---|---|---|
| 1186 | MAC 1 | Information 1 | 0.2 | - |
| 1186 | MAC 2 | Information 1 | 0.8 | 11860 |
| 1186 | MAC 3 | Information 1 | 0.9 | 11860 |
| 1186 | MAC 4 | Information 1 | 0.35 | - |

In conclusion, in embodiments of this application, the data detector may construct the detection instruction, and detect the one or more first terminals for a plurality of times by using the constructed detection instruction, to determine the plurality of groups of profile detection data. In this way, the data analyzer may determine the reference terminal profile based on the plurality of groups of profile detection data. In other words, in embodiments of this application, the terminal is detected online, to accurately determine the corresponding terminal profile on the basis of minimized overheads, and different terminal profiles can be further determined for different category information, to adapt to the category of the terminal. In addition, after the data analyzer sends the reference terminal profile to the access point device, the access point device may apply the reference terminal profile to the terminal. Then, the data detector may determine the plurality of groups of profile quality data, so that the data analyzer optimizes the terminal profile based on the plurality of groups of profile quality data, to further improve the accuracy of the terminal profile.

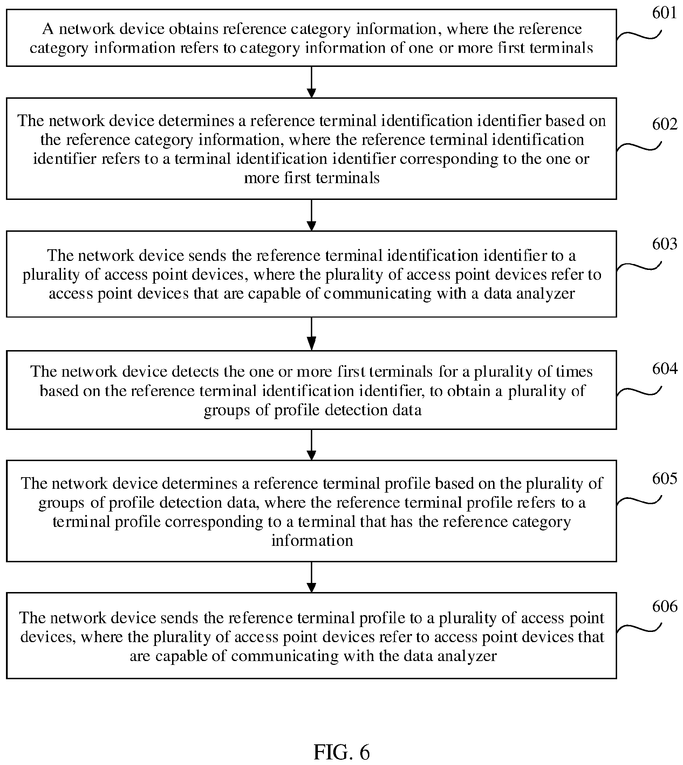

In embodiments of this application, an example in which the data analyzer and the data detector are deployed on a same network device is used for description. In other words, a network device in which the data analyzer and the data detector are deployed is used as an execution body for description. FIG. 6 is a flowchart of a method for determining a terminal profile according to an embodiment of this application. The method includes the following steps.

Step 601: A network device obtains reference category information, where the reference category information refers to category information of one or more first terminals.

In some embodiments, a packet for communication between a terminal and another device usually carries information such as a media access control (media access control, MAC) address, model description information, version description information of an operating system, and a terminal type of the terminal. Therefore, the network device may extract the information from packets, and further determine the reference category information.

It should be noted that for other content in Step 601, refer to related descriptions in Step 401. Details are not described again in embodiments of this application.

Step 602: The network device determines a reference terminal identification identifier based on the reference category information, where the reference terminal identification identifier refers to a terminal identification identifier corresponding to the one or more first terminals.

It should be noted that for content in Step 602, refer to related descriptions in Step 402. Details are not described again in embodiments of this application.

Step 603: The network device sends the reference terminal identification identifier to a plurality of access point devices, where the plurality of access point devices refer to access point devices that are capable of communicating with a data analyzer.

The network device sends the reference terminal identifier to the plurality of access point devices, to enable the access point devices to subsequently apply a corresponding terminal profile to a terminal.

Step 604: The network device detects the one or more first terminals for a plurality of times based on the reference terminal identification identifier, to obtain a plurality of groups of profile detection data.

It should be noted that for content in Step 604, refer to related descriptions in Step 404. Details are not described again in embodiments of this application.

Step 605: The network device determines a reference terminal profile based on the plurality of groups of profile detection data, where the reference terminal profile refers to a terminal profile corresponding to a terminal that has the reference category information.

It should be noted that for content in Step 605, refer to related descriptions in Step 406. Details are not described again in embodiments of this application.

Step 606: The network device sends the reference terminal profile to a plurality of access point devices, where the plurality of access point devices refer to access point devices that are capable of communicating with the data analyzer.

It should be noted that for content in Step 606, refer to related descriptions in Step 407. Details are not described again in embodiments of this application.

In conclusion, in embodiments of this application, the network device may construct a detection instruction, and detect the one or more first terminals for a plurality of times by using the constructed detection instruction, to determine the plurality of groups of profile detection data. In this way, the network device can determine the reference terminal profile based on the plurality of groups of profile detection data. In other words, in embodiments of this application, the terminal is detected online, to accurately determine the corresponding terminal profile on the basis of minimized overheads, and different terminal profiles can be further determined for different category information, to adapt to the category of the terminal. In addition, after the network device sends the reference terminal profile to the access point device, the access point device may apply the reference terminal profile to the terminal. Then, the network device may determine the plurality of groups of profile quality data, and optimize the terminal profile based on the plurality of groups of profile quality data, to further improve the accuracy of the terminal profile.

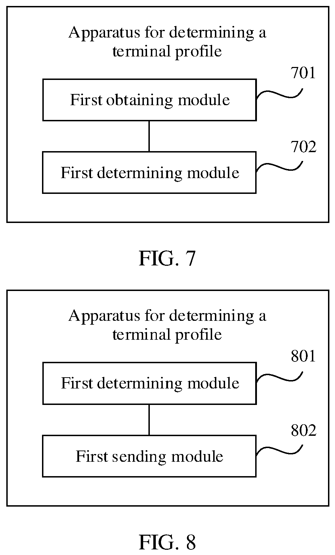

FIG. 7 is a schematic diagram of a structure of an apparatus for determining a terminal profile according to an embodiment of this application. The apparatus is located in a network device. The apparatus may be implemented as a part or all of the network device by using software, hardware, or a combination thereof. As shown in FIG. 7, the apparatus includes a first obtaining module 701 and a first determining module 702.

The first obtaining module 701 is configured to obtain a plurality of groups of profile detection data. The plurality of groups of profile detection data is determined by detecting one or more first terminals for a plurality of times.

The first determining module 702 is configured to determine a reference terminal profile based on the plurality of groups of profile detection data.

Optionally, the first terminals belong to a same category, category information is reference category information, and the reference terminal profile refers to a terminal profile corresponding to a terminal that has the reference category information.

Optionally, the first determining module 702 is configured to:
extract corresponding key feature data from each of the plurality of groups of profile detection data based on a reference profile type, where the reference profile type refers to a type corresponding to a terminal profile that currently needs to be determined; and
determine the reference terminal profile based on a plurality of pieces of extracted key feature data.

When, like in the present invention, the reference profile type is a link quality measurement type, the key feature data includes a protocol support label and protocol description data. The protocol support label is used to indicate whether a corresponding terminal supports a corresponding link signal quality measurement protocol. The protocol description data is used to describe the corresponding link signal quality measurement protocol.

When the reference profile type is a roaming steering type according to a comparative example, the key feature data includes a roaming steering label and steering feature data. The roaming steering label is used to indicate whether roaming steering detection on a corresponding terminal succeeds. The steering feature data is used to describe network information when the roaming steering detection is performed on the corresponding terminal and/or a steering manner of performing the roaming steering detection.

When the reference profile type is a network detection type according to another comparative example, the key feature data includes a detection support label and detection description data. The detection support label is used to indicate whether a corresponding terminal supports a corresponding detection capability. The detection description data is used to describe the corresponding detection capability. The detection capability includes a frequency band and/or a channel.

Optionally, the apparatus further includes:
a second obtaining module, configured to obtain terminal feature data, where the terminal feature data is used to describe a feature of one target terminal or a common feature of a plurality of target terminals;
a second determining module, configured to determine, from a plurality of pieces of stored feature data, target feature data that is most similar to the terminal feature data, where each of the plurality of pieces of feature data corresponds to a terminal profile, and terminal profiles corresponding to the plurality of pieces of feature data include the reference terminal profile; and
a third determining module, configured to determine a terminal profile corresponding to the target feature data as the terminal profile of the one or more target terminals.

Optionally, the apparatus further includes:
a third obtaining module, configured to obtain the reference category information;
a fourth determining module, configured to determine a reference terminal identification identifier based on the reference category information, where the reference terminal identification identifier refers to a terminal identification identifier corresponding to the one or more first terminals; and
a detection module, configured to detect the one or more first terminals for a plurality of times based on the reference terminal identification identifier.

Optionally, the network device is a data analyzer, and the data analyzer is capable of communicating with a data detector.

The apparatus further includes:
a third obtaining module, configured to obtain the reference category information from the data detector;
a fourth determining module, configured to determine a reference terminal identification identifier based on the reference category information, where the reference terminal identification identifier refers to a terminal identification identifier corresponding to the one or more first terminals; and
a first sending module, configured to send the reference terminal identification identifier to the data detector, to enable the data detector to detect the one or more first terminals for a plurality of times based on the reference terminal identification identifier.

Optionally, the fourth determining module is configured to:
determine, from a plurality of pieces of stored category information, target category information that is most similar to the reference category information, where each of the plurality of pieces of category information corresponds to a terminal identification identifier; and
determine a terminal identification identifier corresponding to the target category information as the reference terminal identification identifier.

Optionally, the apparatus further includes:
a second sending module, configured to send the reference terminal identification identifier to a plurality of access point devices. The plurality of access point devices refer to access point devices that are capable of communicating with the network device.

Optionally, the apparatus further includes:
a third sending module, configured to send the reference terminal profile to a plurality of access point devices. The plurality of access point devices refer to access point devices that are capable of communicating with the network device.

Optionally, the apparatus further includes:
a fourth obtaining module, configured to obtain a plurality of groups of profile quality data, where the plurality of groups of profile quality data refers to quality data obtained before and after the reference terminal profile is applied to a plurality of second terminals that have the reference category information;
a fifth determining module, configured to determine one or more third terminals from the plurality of second terminals based on the plurality of groups of profile quality data, where the one or more third terminals refer to a terminal, in the plurality of second terminals, whose quality is not improved after the reference terminal profile is applied;
an allocation module, configured to reallocate a terminal identification identifier to the one or more third terminals; and
a sixth determining module, configured to redetermine a terminal profile corresponding to the one or more third terminals.

Optionally, each of the plurality of groups of profile quality data includes one or more pieces of quality indicator data.

The fifth determining module is configured to:
determine, based on the one or more pieces of quality indicator data included in each of the plurality of groups of profile quality data, a category split value corresponding to each of the plurality of second terminals, where the category split value is used to represent roaming quality of a corresponding terminal; and
select, from the plurality of second terminals, a second terminal whose corresponding category split value is greater than or equal to a split threshold, to obtain the one or more third terminals.

Optionally, the reference category information includes a model identifier, or the reference category information includes a model identifier and a version identifier of an operating system.

In conclusion, in embodiments of this application, the data detector may construct a detection instruction, and detect the one or more first terminals for a plurality of times by using the constructed detection instruction, to determine the plurality of groups of profile detection data. In this way, the data analyzer may determine the reference terminal profile based on the plurality of groups of profile detection data. In other words, in embodiments of this application, a terminal is detected online, to accurately determine a corresponding terminal profile on the basis of minimized overheads, and different terminal profiles can be further determined for different category information, to adapt to a category of the terminal. In addition, after the data analyzer sends the reference terminal profile to the access point device, the access point device may apply the reference terminal profile to the terminal. Then, the data detector may determine the plurality of groups of profile quality data, so that the data analyzer optimizes the terminal profile based on the plurality of groups of profile quality data, to further improve accuracy of the terminal profile.

It should be noted that, when the apparatus for determining a terminal profile provided in the foregoing embodiment determines the terminal profile, division of the foregoing function modules is merely used as an example for description. In actual application, the foregoing functions may be allocated to different function modules for implementation based on a requirement, that is, an internal structure of the apparatus is divided into different function modules, to implement all or some of the functions described above. In addition, the apparatus for determining a terminal profile provided in the foregoing embodiment pertains to a same concept as the method embodiments for determining a terminal profile. For a specific implementation process of the apparatus for determining a terminal profile, refer to the method embodiments. Details are not described herein again.

FIG. 8 is a schematic diagram of a structure of an apparatus for determining a terminal profile according to an embodiment of this application. The apparatus is located in a data detector. The apparatus may be implemented as a part or all of the data detector by using software, hardware, or a combination thereof. As shown in FIG. 8, the apparatus includes a first determining module 801 and a first sending module 802.

The first determining module 801 is configured to determine a plurality of groups of profile detection data. The plurality of groups of profile detection data is determined by detecting one or more first terminals having reference category information for a plurality of times.

The first sending module 802 is configured to send the plurality of groups of profile detection data to a data analyzer, to enable the data analyzer to determine a reference terminal profile based on the plurality of groups of profile detection data. The reference terminal profile refers to a terminal profile corresponding to a terminal that has the reference category information.

Optionally, the first determining module 801 includes:
an obtaining submodule, configured to obtain a reference terminal identification identifier, where the reference terminal identification identifier refers to a terminal identification identifier corresponding to the one or more first terminals; and
a detection submodule, configured to detect the one or more first terminals for a plurality of times based on the reference terminal identification identifier, to obtain the plurality of groups of profile detection data.

Optionally, the detection submodule includes:
a construction unit, configured to construct a detection instruction based on the reference terminal identification identifier;
a first sending unit, configured to send the detection instruction to a first reference terminal by using an access point device associated with the first reference terminal, where the first reference terminal is one of the one or more first terminals;
a first receiving unit, configured to receive, by using the access point device associated with the first reference terminal, log data that is reported by the first reference terminal before and after the detection instruction is received; and
a determining unit, configured to determine a group of profile detection data based on the log data that is reported by the first reference terminal before and after the detection instruction is received.

Optionally, the detection submodule further includes:
a determining unit, configured to determine, based on the reference terminal identification identifier, whether the first reference terminal meets a detection protection condition; and
a triggering unit, configured to: if the first reference terminal meets the detection protection condition, trigger the construction unit to construct the detection instruction based on the reference terminal identification identifier.

In a comparative example, a type of the reference terminal profile is a roaming steering type.

The determining unit is configured to:
obtain first signal strength and second signal strength, where the first signal strength refers to signal strength corresponding to a first access point device, the first access point device refers to an access point device that is associated before roaming of the first reference terminal is steered, the second signal strength refers to signal strength corresponding to a second access point device, and the second access point device refers to an access point device that is associated after the roaming of the first reference terminal is steered;
if it is determined that the first signal strength is within a reference strength range, and a difference between the first signal strength and the second signal strength is greater than a strength threshold, determine a steering protection parameter based on the reference terminal identification identifier, where the steering protection parameter is used to indicate a maximum degree of performing roaming steering detection on the first reference terminal; and
if it is determined that the steering protection parameter meets a steering protection condition, and the first reference terminal is outside a protection whitelist, determine that the first reference terminal meets the detection protection condition.

Optionally, the steering protection parameter includes a total quantity of times of steering for a terminal that has the reference category information, and the steering protection condition includes that the total quantity of times of steering is not greater than a quantity-of-times threshold; and/or
the steering protection parameter includes an average steering time interval for the first reference terminal, and the steering protection condition includes that the average steering time interval is greater than a duration threshold; and/or
the steering protection parameter includes a total quantity of terminals on which the first access point device performs roaming steering detection, and the steering protection condition includes that the total quantity of the terminals is not greater than a quantity threshold.

Optionally, the obtaining submodule includes:
a second sending unit, configured to send the reference category information to the data analyzer, to enable the data analyzer to determine the reference terminal identification identifier based on the reference category information; and
a second receiving unit, configured to receive the reference terminal identification identifier sent by the data analyzer.

Optionally, the apparatus further includes:
a second determining module, configured to determine a plurality of groups of profile quality data, where the plurality of groups of profile quality data refers to quality data obtained before and after the reference terminal profile is applied to a plurality of second terminals that have the reference category information; and
a second sending module, configured to send the plurality of groups of profile quality data to the data analyzer, to enable the data analyzer to evaluate, based on the plurality of groups of profile quality data, terminal profiles corresponding to the plurality of second terminals.

Optionally, the second determining module is configured to:
determine a moment at which a second reference terminal applies the reference terminal profile, to obtain a profile application moment, where the second reference terminal is one of the plurality of second terminals; and
determine a group of profile quality data based on the profile application moment by using log data reported by the second reference terminal.

In conclusion, in embodiments of this application, the data detector may construct the detection instruction, and detect the one or more first terminals for a plurality of times by using the constructed detection instruction, to determine the plurality of groups of profile detection data. In this way, the data analyzer may determine the reference terminal profile based on the plurality of groups of profile detection data. In other words, in embodiments of this application, a terminal is detected online, to accurately determine a corresponding terminal profile on the basis of minimized overheads, and different terminal profiles can be further determined for different category information, to adapt to a category of the terminal. In addition, after the data analyzer sends the reference terminal profile to the access point device, the access point device may apply the reference terminal profile to the terminal. Then, the data detector may determine the plurality of groups of profile quality data, so that the data analyzer optimizes the terminal profile based on the plurality of groups of profile quality data, to further improve accuracy of the terminal profile.

It should be noted that, when the apparatus for determining a terminal profile provided in the foregoing embodiment determines the terminal profile, division of the foregoing function modules is merely used as an example for description. In actual application, the foregoing functions may be allocated to different function modules for implementation based on a requirement, that is, an internal structure of the apparatus is divided into different function modules, to implement all or some of the functions described above. In addition, the apparatus for determining a terminal profile provided in the foregoing embodiment pertains to a same concept as the method embodiments for determining a terminal profile. For a specific implementation process of the apparatus for determining a terminal profile, refer to the method embodiments. Details are not described herein again.

All or some of the foregoing embodiments may be implemented by using software, hardware, firmware, or any combination thereof. When software is used to implement the embodiments, all or some of the embodiments may be implemented in a form of a computer program product. The computer program product includes one or more computer instructions. When the computer instructions are loaded and executed on a computer, all or a part of the procedures or functions according to embodiments of this application are generated. The computer may be a general-purpose computer, a special-purpose computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a digital versatile disc (digital versatile disc, DVD)), a semiconductor medium (for example, a solid-state drive (solid state drive, SSD)), or the like. It should be noted that the computer-readable storage medium mentioned in this application may be a non-volatile storage medium. In other words, the computer-readable storage medium may be a non-transitory storage medium.

It should be understood that "at least one" mentioned in this specification means one or more, and that "a plurality of" means at least two. In descriptions of this application, "/" means "or" unless otherwise specified. For example, A/B may represent A or B. In this specification, "and/or" describes only an association relationship for describing associated objects and represents that three relationships may exist. For example, A and/or B may represent the following three cases: Only A exists, both A and B exist, and only B exists. In addition, to clearly describe the technical solutions in embodiments of this application, terms such as "first" and "second" are used in embodiments of this application to distinguish between same items or similar items that provide basically same functions or purposes. A person skilled in the art may understand that the terms such as "first" and "second" do not limit a quantity and an execution sequence, and the terms such as "first" and "second" do not indicate a definite difference.

## Claims

1. A method for determining a terminal profile, wherein the method comprises:
obtaining, (401), by a data analyzer, reference category information from a data detector, where the reference category information refers to category information of one or more first terminals,
obtaining (405), by the data analyzer, a plurality of groups of profile detection data from the data detector, wherein the plurality of groups of profile detection data is determined by detecting the one or more first terminals for a plurality of times, wherein profile detection data include terminal description information describing a terminal; and
determining (406), by the data analyzer, a reference terminal profile based on the plurality of groups of profile detection data, wherein the reference terminal profile refers to a terminal profile corresponding to a terminal that has the reference category information;
**characterized in that**
the determining, by the data analyzer, a reference terminal profile based on the plurality of groups of profile detection data comprises:
extracting, by the data analyzer, corresponding key feature data from each of the plurality of groups of profile detection data based on a reference profile type, wherein the reference profile type refers to a type corresponding to a terminal profile that currently needs to be determined; and
determining, by the data analyzer, the reference terminal profile based on a plurality of pieces of extracted key feature data, wherein
the reference profile type is a link quality measurement type, the key feature data comprises a protocol support label and protocol description data, the protocol support label indicates whether a corresponding terminal supports a corresponding link signal quality measurement protocol, and the protocol description data describes the corresponding link signal quality measurement protocol,
wherein the reference terminal profile includes protocol support data, and the protocol support data is used to describe a link quality measurement protocol supported by the terminal.

2. A method for determining a terminal profile, wherein the method comprises:
determining, by a data detector (201), a plurality of groups of profile detection data, wherein the plurality of groups of profile detection data is determined by detecting one or more first terminals having reference category information for a plurality of times, wherein profile detection data include terminal description information describing a terminal;
sending, by the data detector (201), reference category information to a data analyzer (202), wherein the reference category information refers to category information corresponding to the one or more first terminals, and
sending, by the data detector (201), the plurality of groups of profile detection data to the data analyzer (202), to enable the data analyzer (202) to determine a reference terminal profile based on the plurality of groups of profile detection data, wherein the reference terminal profile refers to a terminal profile corresponding to a terminal that has the reference category information;
**characterized in that**
a plurality of pieces of key feature data is extractable from each of the plurality of groups of profile detection data based on a reference profile type, wherein the reference profile type refers to a type corresponding to a terminal profile that currently needs to be determined,
wherein the reference profile type is a link quality measurement type, the key feature data comprises a protocol support label and protocol description data, the protocol support label indicates whether a corresponding terminal supports a corresponding link signal quality measurement protocol, and the protocol description data describes the corresponding link signal quality measurement protocol,
wherein the reference terminal profile includes protocol support data, and the protocol support data is used to describe a link quality measurement protocol supported by the terminal.

3. An apparatus for determining a terminal profile, wherein the apparatus is a data analyzer configured to perform the method according to claim 1.

4. An apparatus for determining a terminal profile, wherein the apparatus is a data detector configured to perform the method according to claim 2.

5. A system for determining a terminal profile, wherein the system comprises a data detector, a data analyzer, a plurality of access point devices, and a plurality of terminals, the data analyzer is configured to implement the steps of the method according to claim 1, and the data detector is configured to implement the steps of the method according to claim 2.

## Patentansprüche

1. Verfahren zum Bestimmen eines Endgeräteprofils, wobei das Verfahren Folgendes umfasst:
Erlangen (401), durch einen Datenanalysator, von Referenzkategorieinformationen von einem Datendetektor, wobei sich die Referenzkategorieinformationen auf Kategorieinformationen eines oder mehrerer erster Endgeräte beziehen,
Erlangen (405), durch den Datenanalysator, einer Vielzahl von Gruppen von Profildetektionsdaten von dem Datendetektor, wobei die Vielzahl von Gruppen von Profildetektionsdaten durch mehrmaliges Detektieren des einen oder der mehreren ersten Endgeräte bestimmt wird, wobei die Profildetektionsdaten Endgerätebeschreibungsinformationen beinhalten, die ein Endgerät beschreiben; und
Bestimmen (406), durch den Datenanalysator, eines Referenzendgeräteprofils basierend auf der Vielzahl von Gruppen von Profildetektionsdaten, wobei sich das Referenzendgeräteprofil auf ein Endgeräteprofil bezieht, das einem Endgerät entspricht, das die Referenzkategorieinformationen aufweist;
**dadurch gekennzeichnet, dass**
das Bestimmen, durch den Datenanalysator, eines Referenzendgeräteprofils basierend auf der Vielzahl von Gruppen von Profildetektionsdaten Folgendes umfasst:
Extrahieren, durch den Datenanalysator, von entsprechenden Schlüsselmerkmaldaten aus jeder der Vielzahl von Gruppen von Profildetektionsdaten basierend auf einem Referenzprofiltyp, wobei sich der Referenzprofiltyp auf einen Typ bezieht, der einem Endgeräteprofil entspricht, das aktuell zu bestimmen ist; und
Bestimmen, durch den Datenanalysator, des Referenzendgeräteprofils basierend auf einer Vielzahl von extrahierten Schlüsselmerkmaldatenelementen, wobei
der Referenzprofiltyp ein Verbindungsqualitätsmesstyp ist, die Schlüsselmerkmaldaten ein Protokollunterstützungsetikett und Protokollbeschreibungsdaten umfassen, das Protokollunterstützungsetikett angibt, ob ein entsprechendes Endgerät ein entsprechendes Verbindungssignalqualitätsmessprotokoll unterstützt, und die Protokollbeschreibungsdaten das entsprechende Verbindungssignalqualitätsmessprotokoll beschreiben,
wobei das Referenzendgeräteprofil Protokollunterstützungsdaten beinhaltet und die Protokollunterstützungsdaten dazu verwendet werden, ein Verbindungsqualitätsmessprotokoll zu beschreiben, das durch das Endgerät unterstützt wird.

2. Verfahren zum Bestimmen eines Endgeräteprofils, wobei das Verfahren Folgendes umfasst:
Bestimmen, durch einen Datendetektor (201), einer Vielzahl von Gruppen von Profildetektionsdaten, wobei die Vielzahl von Gruppen von Profildetektionsdaten durch Detektieren eines oder mehrerer erster Endgeräte, die Referenzkategorieinformationen aufweisen, für eine Vielzahl von Malen bestimmt wird, wobei die Profildetektionsdaten Endgerätebeschreibungsinformationen beinhalten, die ein Endgerät beschreiben;
Senden, durch den Datendetektor (201), von Referenzkategorieinformationen an einen Datenanalysator (202), wobei sich die Referenzkategorieinformationen auf Kategorieinformationen beziehen, die dem einen oder den mehreren ersten Endgeräten entsprechen, und
Senden, durch den Datendetektor (201), der Vielzahl von Gruppen von Profildetektionsdaten an den Datenanalysator (202), um es dem Datenanalysator (202) zu ermöglichen, basierend auf der Vielzahl von Gruppen von Profildetektionsdaten ein Referenzendgeräteprofil zu bestimmen, wobei sich das Referenzendgeräteprofil auf ein Endgeräteprofil bezieht, das einem Endgerät entspricht, das die Referenzkategorieinformationen aufweist;
**dadurch gekennzeichnet, dass**
eine Vielzahl von Schlüsselmerkmaldatenelementen aus jeder der Vielzahl von Gruppen von Profildetektionsdaten basierend auf einem Referenzprofiltyp extrahierbar ist, wobei sich der Referenzprofiltyp auf einen Typ bezieht, der einem Endgeräteprofil entspricht, das aktuell zu bestimmen ist,
wobei der Referenzprofiltyp ein Verbindungsqualitätsmesstyp ist, die Schlüsselmerkmaldaten ein Protokollunterstützungsetikett und Protokollbeschreibungsdaten umfassen, das Protokollunterstützungsetikett angibt, ob ein entsprechendes Endgerät ein entsprechendes Verbindungssignalqualitätsmessprotokoll unterstützt, und die Protokollbeschreibungsdaten das entsprechende Verbindungssignalqualitätsmessprotokoll beschreiben,
wobei das Referenzendgeräteprofil Protokollunterstützungsdaten beinhaltet und die Protokollunterstützungsdaten dazu verwendet werden, ein Verbindungsqualitätsmessprotokoll zu beschreiben, das durch das Endgerät unterstützt wird.

3. Vorrichtung zum Bestimmen eines Endgeräteprofils, wobei die Vorrichtung ein Datenanalysator ist, der dazu konfiguriert ist, das Verfahren nach Anspruch 1 durchzuführen.

4. Vorrichtung zum Bestimmen eines Endgeräteprofils, wobei die Vorrichtung ein Datendetektor ist, der dazu konfiguriert ist, das Verfahren nach Anspruch 2 durchzuführen.

5. System zum Bestimmen eines Endgeräteprofils, wobei das System einen Datendetektor, einen Datenanalysator, eine Vielzahl von Zugangspunkteinrichtungen und eine Vielzahl von Endgeräten umfasst, der Datenanalysator dazu konfiguriert ist, die Schritte des Verfahrens nach Anspruch 1 umzusetzen, und der Datendetektor dazu konfiguriert ist, die Schritte des Verfahrens nach Anspruch 2 umzusetzen.

## Revendications

1. Procédé de détermination d'un profil de terminal, dans lequel le procédé comprend :
l'obtention (401), par un analyseur de données, d'informations de catégorie de référence à partir d'un détecteur de données, où les informations de catégorie de référence font référence à des informations de catégorie d'un ou plusieurs premiers terminaux,
l'obtention (405), par l'analyseur de données, d'une pluralité de groupes de données de détection de profil à partir du détecteur de données, dans lequel la pluralité de groupes de données de détection de profil sont déterminées en détectant les un ou plusieurs premiers terminaux à une pluralité de reprises, dans lequel des données de détection de profil comportent des informations de description de terminal décrivant un terminal ; et
la détermination (406), par l'analyseur de données, d'un profil de terminal de référence sur la base de la pluralité de groupes de données de détection de profil, dans lequel le profil de terminal de référence fait référence à un profil de terminal correspondant à un terminal qui possède les informations de catégorie de référence ;
**caractérisé en ce que**
la détermination, par l'analyseur de données, d'un profil de terminal de référence sur la base de la pluralité de groupes de données de détection de profil comprend :
l'extraction, par l'analyseur de données, de données de caractéristiques clés correspondantes de chacun de la pluralité de groupes de données de détection de profil sur la base d'un type de profil de référence, dans lequel le type de profil de référence fait référence à un type correspondant à un profil de terminal qui doit actuellement être déterminé ; et
la détermination, par l'analyseur de données, du profil de terminal de référence sur la base d'une pluralité d'éléments de données de caractéristiques clés extraites, dans lequel
le type de profil de référence est un type de mesure de la qualité de liaison, les données de caractéristiques clés comprennent une étiquette de support de protocole et des données de description de protocole, l'étiquette de support de protocole indique si un terminal correspondant prend en charge un protocole de mesure de qualité de signal de liaison correspondant, et les données de description de protocole décrivent le protocole de mesure de qualité de signal de liaison correspondant,
dans lequel le profil de terminal de référence comporte des données de support de protocole, et les données de support de protocole sont utilisées pour décrire un protocole de mesure de qualité de liaison supporté par le terminal.

2. Procédé de détermination d'un profil de terminal, dans lequel le procédé comprend :
la détermination, par un détecteur de données (201), d'une pluralité de groupes de données de détection de profil, dans lequel la pluralité de groupes de données de détection de profil sont déterminées en détectant un ou plusieurs premiers terminaux présentant des informations de catégorie de référence à une pluralité de reprises, dans lequel des données de détection de profil comportent des informations de description de terminal décrivant un terminal ;
l'envoi, par le détecteur de données (201), d'informations de catégorie de référence à un analyseur de données (202), dans lequel les informations de catégorie de référence font référence à des informations de catégorie correspondant aux un ou plusieurs premiers terminaux, et
l'envoi, par le détecteur de données (201), de la pluralité de groupes de données de détection de profil à l'analyseur de données (202), pour permettre à l'analyseur de données (202) de déterminer un profil de terminal de référence sur la base de la pluralité de groupes de données de détection de profil, dans lequel le profil de terminal de référence fait référence à un profil de terminal correspondant à un terminal qui présente les informations de catégorie de référence ;
**caractérisé en ce**
**qu'**une pluralité d'éléments de données de caractéristiques clés peuvent être extraits de chacun de la pluralité de groupes de données de détection de profil sur la base d'un type de profil de référence, dans lequel le type de profil de référence fait référence à un type correspondant à un profil de terminal qui doit actuellement être déterminé,
dans lequel le type de profil de référence est un type de mesure de qualité de liaison, les données de caractéristiques clés comprennent une étiquette de support de protocole et des données de description de protocole, l'étiquette de support de protocole indique si un terminal correspondant prend en charge un protocole de mesure de qualité de signal de liaison correspondant, et les données de description de protocole décrivent le protocole de mesure de qualité de signal de liaison correspondant,
dans lequel le profil de terminal de référence comporte des données de support de protocole, et les données de support de protocole sont utilisées pour décrire un protocole de mesure de qualité de liaison supporté par le terminal.

3. Appareil de détermination d'un profil de terminal, dans lequel l'appareil est un analyseur de données configuré pour réaliser le procédé selon la revendication 1.

4. Appareil de détermination d'un profil de terminal, dans lequel l'appareil est un détecteur de données configuré pour réaliser le procédé selon la revendication 2.

5. Système de détermination d'un profil de terminal, dans lequel le système comprend un détecteur de données, un analyseur de données, une pluralité de dispositifs de point d'accès, et une pluralité de terminaux, l'analyseur de données est configuré pour mettre en œuvre les étapes du procédé selon la revendication 1, et le détecteur de données est configuré pour mettre en œuvre les étapes du procédé selon la revendication 2.
